# EUROPÄISCHE PATENTSCHRIFT

(11) **EP 0 525 289 B1**
(45) Veröffentlichungstag und Bekanntmachung des Hinweises auf die Patenterteilung: **06.12.1995**
(21) Anmeldenummer: 92103672.9
(22) Anmeldetag: 04.03.1992
(51) Int. Cl.: F16J 15/32

(54) **Kassettendichtung**
Cartridge sealing
Joint en cartouche

(30) Priorität: 24.07.1991 DE 4124521
(43) Veröffentlichungstag der Anmeldung: 03.02.1993
(73) Patentinhaber: Firma Carl Freudenberg, 69469 Weinheim (DE)
(72) Erfinder: Schmitt, Wolfgang, W-6806 Viernheim (DE)

(56) Entgegenhaltungen:
- EP-A- 0 168 092
- FR-A- 2 625 282

## Beschreibung

Die Erfindung betrifft eine Kassettendichtung nach dem Oberbegriff von Anspruch 1.

Eine solche Kassettendichtung ist aus der EP 0 267 353 bekannt. Eine derartige Kassettendichtung weist allerdings nicht die gewünschte Gebrauchsdauer auf. Dies ist darauf zurückzuführen, daß das durch die Einwirkung von Fliehkräften in radialer Richtung nach außen geförderte Medium nicht befriedigend zur Kühlung und Schmierung der Dichtlippe beiträgt.

Der Erfindung liegt die Aufgabe zugrunde, eine Kassettendichtung der eingangs genannten Art derart weiterzuentwickeln, daß sich insbesondere bei hohen Wellendrehzahlen und damit einhergehenden, hohen Temperaturen wesentlich verbesserte Gebrauchseigenschaften ergeben. Die fliehkraftbedingt aufgewirbelten Flüssigkeitsbestandteile sollen besonders zügig und gezielt zur Dichtlippe zurückgeführt werden, um eine verbesserte Kühlung und Schmierung der Dichtlippe und eine deutlich verbesserte Gebrauchsdauer zu bewirken.

Diese Aufgabe wird erfindungsgemäß bei einer Kassettendichtung der eingangs genannten Art mit den kennzeichnenden Merkmalen von Anspruch 1 gelöst. Auf vorteilhafte Ausgestaltungen nehmen die Unteransprüche bezug.

Bei der erfindungsgemäßen Kassettendichtung umschließt die geneigte Ablauffläche den Flansch in axialer Richtung vollständig und die Ablauffläche weist einen in radialer Richtung verlaufenden Fortsatz auf, der auf der dem abzudichtenden Raum zugewandten Seite zumindest eine Dichtung aufweist, die an eine axial benachbarte Dichtfläche anlegbar ist. Hierbei ist von Vorteil, daß das gesamte, durch die Fliehkraft bedingt in radialer Richtung nach außen geförderte, abzudichtende Medium stets auf die geneigte Ablauffläche, die einen Bestandteil des Außenringes bildet, auftrifft und an dieser entlang in Richtung des Ringraumes gefördert wird. Von hervorzuhebender Bedeutung ist, daß dadurch eine Verbesserung der Kühlung und Schmierung der Dichtlippe erreicht wird.

Darüber hinaus ist von Vorteil, daß durch einfaches Austauschen des Außenringes eine besonders einfache Anpassung der Kassettendichtung an die unterschiedlichsten Gegebenheiten des Anwendungsfalles erfolgen kann. Sowohl die Ausdehnung der Kassettendichtung in radialer Richtung ist besonders gut variierter, als auch der Schmiermittelstrom in Richtung der Dichtlippe.

Durch den Fortsatz mit der Dichtung, weist eine solche Kassettendichtung eine dynamisch belastete Dichtlippe und eine Dichtung auf, die statisch belastet ist. Die Anwendbarkeit wird dadurch wesentlich vergrößert und die Montage sowie die Herstellung, dadurch daß beide Dichtungen beispielsweise am Außenteil festgelegt sind, deutlich vereinfacht. Die Kombination von statisch und dynamisch beanspruchten Dichtsystemen, die beide an dem steifen Außenteil festgelegt sind, ist in zahlreichen Varianten denkbar und wird im Rahmen dieser Erfindung nur anhand eines Ausführungsbeispieles näher erläutert. Der Fortsatz kann mit dem Flansch eine im wesentlichen gemeinsame Radialebene bilden.

Die Ablauffläche kann mit der Achse einen Winkel von 30° bis 80°, bevorzugt aber einen Winkel von 45° bis 60° einschließen. Die Neigung der Ablauffläche sowie die Ausdehnung der Kassettendichtung in radialer Richtung stehen dabei in unmittelbarem Zusammenhang. Im Rahmen dieser Erfindung ist es vorgesehen, daß die Ablauffläche einen Winkel mit der Achse einschließt, der unter Berücksichtigung sinnvoller Abmessungen der Kassettendichtung so groß wie möglich ist. Das durch die Spaltverbindung dringende Medium, das durch die Fliehkraft des Innenringes und des daran einstückig angeformten Flansches in radialer Richtung gegen die geneigt Ablauffläche des Außenringes geschleudert wird, gelangt dann besonders zügig und gezielt zur Dichtlippe, die den Ringraum begrenzt und den rotierenden Innenring während der bestim mungsgemäßen Verwendung anliegend berührt. Sowohl der Kühl- als auch der Schmiereffekt sind bei derart ausgestalteten Kassettendichtungen besonders vorteilhaft.

Die Dichtlippe und die Dichtung können einstückig ausgebildet sein. Die Herstellung des Außenteils, das aus metallischem Werkstoff oder aus Kunststoff bestehen kann, ist durch die einstückig ausgebildeten Dichtungen besonders einfach und in wirtschaftlicher Hinsicht kostengünstig herstellbar. Die Dichtungen an sich können die verschiedenartigsten Formen aufweisen und aus unterschiedlichen Materialien bestehen, was aber allgemein bekannt ist.

Als bevorzugtes Anwendungsgebiet ist die Verwendung der beschriebenen Kassettendichtung als kombinierte Kurbelwellen- und Verschlußdeckeldichtung für eine Verbrennungskraftmaschine vorgesehen. Hierbei ist von Vorteil, daß die Kassettendichtung sowohl die statische Abdichtung des Verschlußdeckels als auch die dynamische Abdichtung der Kurbelwelle in einem Motorengehäuse übernimmt. Durch die einfache Anordnung der Bestandteile der Kassettendichtung ist eine sichere Montage durch Vermeidung von Montagefehler gegeben. Auch die besonders empfindliche Dichtlippe, die dynamisch beansprucht am relativ beweglichen Innenring anliegt, ist bei einer derartigen Ausgestaltung geschützt. Ein weiterer Vorteil ist darin zu sehen, daß die Oberfläche der Kurbelwelle im Bereich der Dichlippe keiner besonderen Bearbeitung bedarf. Eine Relativbewegung einander berührender Teile zwischen Dichlippe und Kurbelwelle findet nicht statt. Die Dichtung, die im Fortsatz auf der dem abzudichtenden Raum zugewandten Seite angeordnet ist kann sich beispielsweise außenseitig am Motorblock anlegen und dichtet den abzudichtenden Raum gegen die Umgebung hin ab.

Der Gegenstand der vorliegenden Erfindung wird nachfolgend anhand der als Anlage beigefügten Zeichnung weiter erläutert. Es zeigen:
Fig. 1 eine Kassettendichtung, bei der der Außenring mit einer den üblichen Radialwellendichtringen entsprechenden Dichtlippe versehen ist sowie mit einer an diese einstückig angeformte statische Dichtung im Bereich des Fortsatzes.
Fig. 2 eine erfindungsgemäße Kassettendichtung in einer Ansicht.

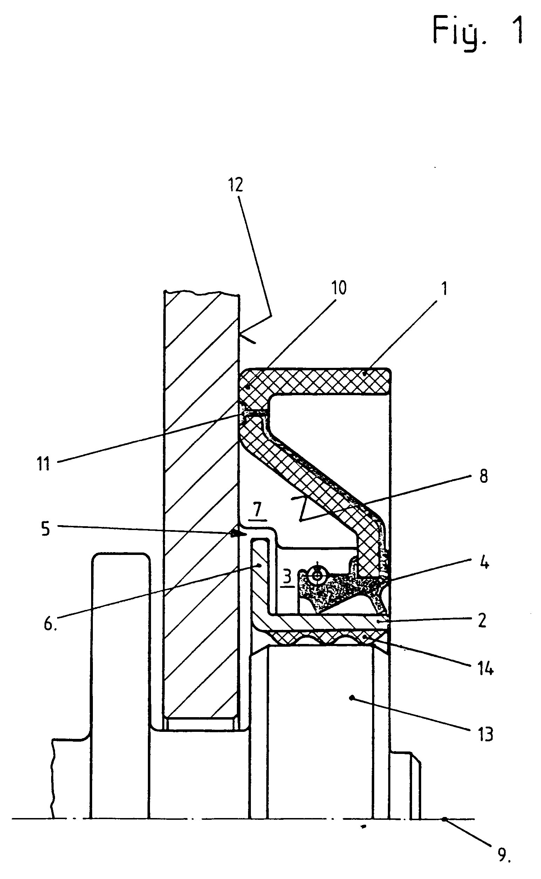

Bei der Ausführung nach Fig. 1 handelt es sich lediglich um eines von vielen möglichen Beispielen der Ausgestaltung der erfindungsgemäßen Kassettendichtung. In diesem Fall bestehen die Dichtlippe 4 und die Dichtung 11, die einstückig ausgebildet sind, aus elastischem Werkstoff, der im flüssigen Zustand an den vorgeformten Außenring 1 angeformt und anschließend verfestigt wurde. Die Kassettendichtung umfaßt im wesentlichen einen Außenring 1 und einen Innenring 2, die gemeinsam einen Ringraum 3 begrenzen. Der Innenring 2 weist auf seiner in radialer Richtung der Kurbelwelle 13 zugewandten Fläche eine statisch beanspruchte Dichtung 14 auf, die durch mehrere in axialer Richtung einander benachbarter Dichtlippen gebildet ist. Die der Kurbelwelle 13 in radialer Richtung abgewandte und dem Außenring 1 zugewandte Fläche ist als Gleitfläche ausgebildet und wird von der Dichtlippe 4 anliegend berührt. Zwischen dem abgedichteten Raum und dem Ringraum 3 ist eine Spaltverbindung 5 vorgesehen, die durch einen einstückig an den Innenring 2 angeformten Flansch 6 begrenzt ist, der weitgehend radial in Richtung des Außenteils 1 weist. Der Flansch 6 ragt bis in den Bereich von Segmentausschnitten 7, die gleichmäßig am Innenumfang des Außenringes 1 verteilt sind und den Ringraum 3 und den abzudichtenden Raum verbindende Kanäle bilden. Der Außenring 1 ist im Bereich der Kanäle derart gestaltet, daß die Kanäle gemeinsam durch eine geneigte Ablauffläche 8 begrenzt sind. Die Ablauffläche 8 schließt in diesem Beispiel mit der Achse 9, die von Außenring 1 und Innenring 2 konzentrisch umschlossen wird, einen Winkel von ca. 45° ein. Diese Ausführung zeichnet sich durch besonders geringe Abmessungen der Kassettendichtung in radialer Richtung aus. Davon abweichende Winkel, insbesondere Winkel von 45° bis annähernd 90° sind für die Gebrauchsdauer der erfindungsgemäßen Kassettendichtung besonders vorteilhaft, bewirken allerdings auch größere Abmessungen der Kassettendichtung in radialer Richtung. Ein Abwägen zwischen dem Neigungswinkel der Ablauffläche 8 und der Abmessung der Kassettendichtung in radialer Richtung kann nur im Einzelfall unter Zugrundelegung der jeweiligen Einbauverhältnisse erfolgen. Allerdings kann generell angemerkt werden, daß die Ablauffläche 8 eine Neigung aufweisen soll, die unter Berücksichtigung sämtlicher Randbedingungen so groß wie möglich gewählt werden sollte. Die vorteilhafte Wirkung der Kassettendichtung ist dadurch bewirkt, daß die Ablauffläche 8 den Flansch 6 und die Dichtlippe 4 zumindest über die obere Umfangshälfte umschließt. Dadurch ist gewährleistet, daß das gesamte fließfähige Medium, das durch die Rotation der Kurbelwelle an die geneigte Ablauffläche geschleudert wird, der dynamisch beanspruchten Dichtlippe 4 zur Schmierung und insbesondere zur wirkungsvollen Kühlung zugeführt wird. Des weiteren sind die Segmentausschnitte 7 so angeordnet und ausgebildet, daß das gesamte, in dem Ringraum 3 enthaltene Flüssigkeitsvolumen eine kontinuierliche Umwälzung und Erneuerung erfährt. Auch die Schmierwikung des Mediums bleibt durch die relativ geringen Temperaturen vollständig erhalten. Ablagerungen im Bereich der Dichtlippe sind durch diese Ausgestaltung ebenfalls nicht mehr zu befürchten. Die Ablauffläche 8 ist in diesem Beispiel durch einen Fortsatz 10 verlängert der sich ungefähr in der gleichen Radialebene befindet, wie der Flansch 6. Der Flansch 6 begrenzt die Spaltverbindung 5 zwischen dem abgedichteten Raum und dem Ringraum 3. Der Fortsatz 10 weist eine in Richtung des abzudichtenden Raumes, der hier durch ein Motorengehäuse gebildet ist, vorstehende Dichtung 11 auf, die an der axial benachbarten Dichtfläche 12 des Motorgehäuses angelegt ist. Zur besseren statischen Abdichtung kann die Dichtung 11 beispielsweise auch mehrere Dichtlippen aufweisen.

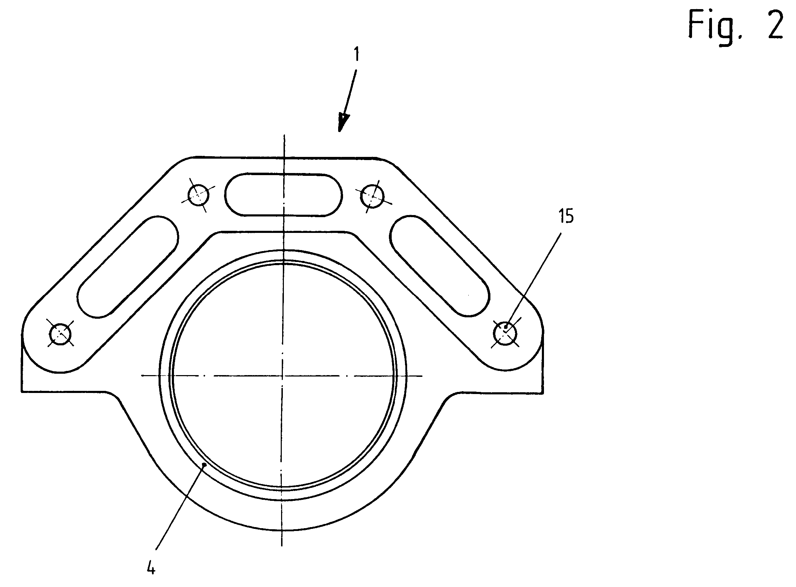

In Fig. 2 ist eine erfindungsgemäße Kassettendichtung in einer Ansicht dargestellt. Hier ist zu erkennen, daß die Kassettendichtung als Flanschkassette ausgebildet ist und durch mehrere Verschraubungen 15 axial am Motorgehäuse festlegbar ist. Neben der sicheren statischen und dynamischen Abdichtung des Motorgehäuses und der Kurbelwelle durch nur ein Bauteil, ist die einfache und problemlose Montage der Kassettendichtung von besonderer Bedeutung sowie deren einfache, in wirtschaftlicher Hinsicht kostengünstige Herstellung und die ausgezeichneten Gebrauchseigenschaften während einer langen Gebrauchsdauer. Neben der hier dargestellten Ausgestaltung der Kassettendichtung als Flanschkassette kann der Außenring 1 bei anderer Ausgestaltung beispielsweise auch in die Nut eines angrenzenden Gehäuses eingeschnappt sein. Die vorteilhaften, vorstehend beschriebenen Effekte bleiben auch dann erhalten.

## Patentansprüche

1. Kassettendichtung, umfassend einen Außen-(1) und einen Innenring (2) von entgegengesetztem winkelförmigem Profil, die gemeinsam einen Ringraum (3) mit einer konzentrisch gedachten Achse (9) umschließen, wobei der Außenring (1) mit wenigstens einer an dem Innenring (2) anliegenden Dichtlippe (4) versehen ist, die den Ringraum (3) abdichtet, wobei eine Spaltverbindung (5) zwischen dem Ringraum (3) und dem abgedichteten Raum vorhanden ist, die auf der einen Seite durch einen mit dem Innenring (2) verbundenen Flansch (6) begrenzt ist, wobei die Spaltverbindung (5) hinsichtlich ihres Querschnitts auf der von dem Flansch (6) abgewandten Seite in gleichmäßig auf dem Umfang verteilten Segmentausschnitten (7) des Außenringes (1) aufgeweitet ist, die den Ringraum (3) und den abzudichtenden Raum verbindende Kanäle bilden, wobei die Kanäle in axialer Richtung auf der dem Flansch (6) zugewandten Seite durch eine kegelförmig geneigte Ablauffläche (8) begrenzt sind, die einen Bestandteil eines die Achse (9) konzentrisch umschließenden, in Richtung des Ringraumes (3) trichterförmig erweiterten Durchmessers bilden und wobei die Ablauffläche (8) in axialer Richtung die Dichtlippe (4) zumindest teilweise umschließt, dadurch gekennzeichnet, daß die Ablauffläche (8) in axialer Richtung den Flansch (6) vollständig umschließt und daß die Ablauffläche (8) einen in radialer Richtung verlaufenden Fortsatz (10) aufweist, der auf der dem abzudichtenden Raum zugewandten Seite zumindest eine Dichtung (11) aufweist, die an eine axial benachbarte Dichtfläche (12) anlegbar ist.

2. Kassettendichtung nach Anspruch 1, dadurch gekennzeichnet, daß die Ablauffläche (8) mit der Achse (9) einen Winkel von 30° bis 80° einschließt.

3. Kassettendichtung nach Anspruch 2, dadurch gekennzeichnet, daß der Winkel 45° bis 60° beträgt.

4. Kassettendichtung nach Anspruch 1 bis 3, dadurch gekennzeichnet, daß der Fortsatz (10) mit dem Flansch (6) eine im wesentlichen gemeinsame Radialebene bildet.

5. Kassettendichtung nach Anspruch 1 bis 4, dadurch gekennzeichnet, daß die Dichtlippe (4) und die Dichtung (11) einstückig ausgebildet sind.

6. Kassettendichtung nach Anspruch 1 bis 5, gekennzeichnet durch die Verwendung als kombinierte Kurbelwellen- und Verschlußdeckeldichtung für eine Verbrennungskraftmaschine.

## Claims

1. A cartridge seal, comprising an outer ring (1) and an inner ring (2) of opposed angular profile, which rings jointly surround an annular space (2) with a concentric imaginary axis (9), the outer ring (1) being provided with at least one sealing lip (4) which bears against the inner ring (2) and seals off the annular space (3), there being a gap connection (5) present between the annular space (3) and the sealed-off space, which gap connection is bounded on the one side by a flange (6) connected to the inner ring (2), the gap connection (5) being widened in respect of its cross-section on the side facing away from the flange (6) in segment sections (7) of the outer ring (1), which sections are distributed uniformly around the circumference and form channels connecting the annular space (3) and the shape to be sealed off, the channels being bounded in the axial direction on the side facing the flange (6) by a conically inclined outflow surface (8) which forms a constituent part of a diameter which concentrically surrounds the axis (9) and is widened in the manner of a funnel in the direction of the annular space (3), the outflow surface (8) at least partially surrounding the sealing lip (4) in the axial direction, characterized in that the outflow surface (8) completely surrounds the flange (6) in the axial direction, and in that the outflow surface (8) has a projection (10) which runs in the radial direction and has on the side facing the space to be sealed off at least one seal (11) which can be placed against an axially adjacent sealing surface (12).

2. A cartridge seal according to claim 1, characterized in that the outflow surface (8) encloses an angle of 30° to 80° with the axis (9).

3. A cartridge seal according to claim 2, characterized in that the angle is 45° to 60°.

4. A cartridge seal according to any of claims 1 to 3, characterized in that the projection (10) forms with the flange 6 an essentially common radial plane.

5. A cartridge seal according to any of claims 1 to 4, characterized in that the sealing lip (4) and the seal (11) are of integral construction.

6. A cartridge seal according to any of claims 1 to 5, characterized by use as a combined crankshaft and closure lid seal for an internal combustion engine.

## Revendications

1. Joint en cartouche comprenant une bague extérieure (1) et une bague intérieure (2) de profil angulaire opposé, qui ensemble entourent un espace annulaire (3) comportant un axe concentrique de par sa conception (9), la bague extérieure (1) étant pourvue d'au moins une lèvre d'étanchéité (4) adjacente à la bague intérieure (2), qui rend étanche l'espace annulaire (3), un raccord de fente (5) étant présent entre l'espace annulaire (3) et l'espace à rendre étanche, qui est limité sur le côté par une bride (6) reliée à la bague intérieure (2), le raccord de fente (5) étant, quant à sa section transversale, élargi sur le côté opposé à la bride (6) en fragments de segment (7) de la bague extérieure (1) répartis régulièrement sur la circonférence, qui forment des conduits reliant l'espace annulaire (3) et l'espace à rendre étanche, les conduits étant limités dans le sens axial sur le côté orienté vers la bride (6) par une surface de décharge (8) inclinée et conique, qui forment un élément d'un diamètre entourant l'axe (9) de façon concentrique, agrandi en forme d'entonnoir dans le sens de l'espace annulaire (3) et la surface de décharge (8) entourant au moins partiellement la lèvre d'étanchéité (4) dans le sens axial, caractérisé en ce que la surface de décharge (8) entoure totalement la bride (6) dans le sens axial et en ce que la surface de décharge (8) présente un prolongement (10) passant dans le sens radial, qui présente au moins un joint (11) sur le côté orienté vers l'espace à rendre étanche, qui peut être mis contre une surface d'étanchéité (12) contiguë de façon axiale.

2. Joint en cartouche selon la revendication 1, caractérisé en ce que la surface de décharge (8) comporte un angle de 30° à 80° avec l'axe (9).

3. Joint en cartouche selon la revendication 2, caractérisé en ce que l'angle est de 45° à 60°.

4. Joint en cartouche selon les revendications 1 à 3, caractérisé en ce que le prolongement (10) forme avec la bride (6) un plan radial essentiellement commun.

5. Joint en cartouche selon les revendications 1 à 4, caractérisé en ce que la lèvre d'étanchéité (4) et le joint (11) sont conçus d'une seule pièce.

6. Joint en cartouche selon les revendications 1 à 5, caractérisé par son utilisation en tant que joint combiné d'arbre coudé et de couvercle d'obturation pour une machine à combustion interne.
